# EUROPEAN PATENT SPECIFICATION

(11) **EP 1 366 677 B1**
(45) Date of publication and mention of the grant of the patent: **07.12.2005**
(21) Application number: 03012056.2
(22) Date of filing: 28.05.2003
(51) Int. Cl.: A23L 1/314, A23B 4/20, A23B 4/24, A23B 4/22

(54) **Composition for treatment of whole muscle product and method for producing whole muscle product using said composition**
Zusammensetzung zur Behandlung von Produkt aus ganzem Muskel und Verfahren zur Herstellung eines Produktes aus ganzem Muskel mit dieser Zusammensetzung
Composition pour produit à base de muscle entier et procédé de préparation d' un produit à base de muscle entier utilisant la dite composition

(30) Priority: 30.05.2002 JP 2002157875; 27.12.2002 JP 2002381461
(43) Date of publication of application: 03.12.2003
(73) Proprietor: Ajinomoto Co., Inc., Chuo-ku, Tokyo (JP)
(72) Inventor: Nakagoshi, Hiroyuki, c/o Ajinomoto Co., Inc., Kawasaki-shi, Kanagawa-ken (JP); Morita, Akiko, c/o Ajinomoto Co., Inc., Kawasaki-shi, Kanagawa-ken (JP)
(74) Representative: Strehl Schübel-Hopf & Partner

(56) References cited:
- EP-A- 1 084 621
- PATENT ABSTRACTS OF JAPAN vol. 012, no. 446 (C-546), 24 November 1988 (1988-11-24) & JP 63 169966 A (CHIBA SEIFUN KK), 13 July 1988 (1988-07-13)
- PATENT ABSTRACTS OF JAPAN vol. 014, no. 566 (C-0789), 17 December 1990 (1990-12-17) & JP 02 245162 A (CHIBA SEIFUN KK), 28 September 1990 (1990-09-28)
- SCHEID D: "Der Einfluss von Trinatriumcitrat auf Wasserbindung und Konsistenz bei gegartem Kasseler." , FLEISCHWIRTSCHAFT 1979 SCHEID GMBH, POSTFACH 50,D-6621 UBERHERRN/SAAR, FEDERAL REPUBLIC OF GERMANY, VOL. 59, NR. 9, PAGE(S) 1245 - 1248, 1250;1309 XP009017785 * the whole document *
- PATENT ABSTRACTS OF JAPAN vol. 1996, no. 02, 29 February 1996 (1996-02-29) & JP 07 255426 A (AJINOMOTO CO INC), 9 October 1995 (1995-10-09)

## Description

### BACKGROUND OF THE INVENTION

### [Technical Field Pertinent to the Invention]

The present invention relates to a preparation aiming to enhance bindability and hardness of a whole muscle product while producing the product without the addition or With the reduced addition of a phosphate, a pickle including the preparation, a whole muscle product obtained using the pickle, and a method for producing the whole muscle product.

### [Related Art]

Whole muscle products such as ham, bacon and roast pork are generally required to have properties such as enough hardness and elasticity. Since whole muscle products are preferably eaten as being sliced, most of them are sold in the form of thin slices. Also since these sliced products are, though thin, required to have good hardness in chewing, it is preferable that they are hard and elastic. Further industrially, it greatly influences the yield of the products, namely, productivity that these products are less broken when sliced. Since harder and more elastic products can withstand a shearing force in slicing, the yield of the products during a slicing process is increased, and productivity is improved. Therefore, it is a significant issue to make the whole muscle products finished in a hard and elastic state because the fact directly influences the benefit of the producers.

The use of phosphate is quite effective for this issue. Therefore, phosphates are used quite commonly during production of meat products. Particularly, polyphosphates are highly effective compared to a table salt or an alkali compound, and greatly contribute to the improvement of qualities and productivity of whole muscle products.

Meanwhile, it is now being clarified that phosphates destroy a balance between calcium and phosphorus in vivo, especially that polyphosphates, owing to the strong sequestering ability thereof, insolubilize calcium to inhibit its absorption.

Thereby, while consumption of processed foods using large amounts of phosphates have been increased, it has been considered that excessive intake of phosphates poses a nutritional problem.

This fact has now been widely recognized among consumers, and since consumers highly demand to reduce intake of phosphates, foods prepared in the absence of polyphosphate or in the small presence of phosphates have been actively developed in the meat-processing industry. Further, there has been a problem that a taste is impaired owing to the bitterness of polyphosphate itself.

Nevertheless, there has also occurred a problem that whole muscle products produced in the absence of phosphates are lacking in hardness and elasticity, and soft, and tend to be broken when sliced. And the limp feeling in a mouth makes whole muscle products difficult to produce and of low commercial value.

In such a situation, a technique that replaces the use of phosphates has been eagerly required in the meat-processing industry.

Japanese Patent No. 2630829 states that the use of transglutaminase and auxiliary proteins can replace functions, which phosphates give to meat products. This method is quite an effective method for paste products.

Japanese Patent n° 2245162 refers to a liquid composition comprising at least one of calcium oxide, calcium hydroxide and poked calcium, albeit free from phosphates, which improves the integrity of ham.

However, since transglutaminase must be added at a high concentration to whole muscle products, it is uneconomical to use expensive transglutaminase in quite a large quantity Further, when the invention is used in the form of a pickle including a hetero-protein, viscosity of the pickle changes gradually (increases) during preservation due to crosslinking polymerization of the protein by the transglutaminase in the pickle. Thereby, it comes difficult to control the injection pressure for injecting a predetermined amount of the pickle into meat. In an extreme case, a problem may occur that an injector cannot be used because of significant increase in viscosity or gelation.

Since it is well known that the bindability of meat is improved by increasing the pH thereof, a method for improving the water retention, bindability, taste, etc. of meat using together with alkaline raw material has been used traditionally. Carbonates (calcium carbonate, sodium carbonate, sodium hydrogencarbonate, and the like) are alkaline food additives used comparatively frequently in meat-processing, in order to increase yields in heating chicken for frying or minced meat products (sausage, hamburger, etc.) or to finish them soft. Particularly, sodium and potassium carbonate have a strong power of increasing the pH to be effective by a comparatively small amount of addition. However, when a carbonate is used in such an amount as to improve sufficiently the bindability of a whole muscle product, the so-called "blow holes" (Japanese su) will occur in the whole muscle product due to retention of carbonic acid gas generated by heating and neutralization. As a result, a problem will occur that the commercial value of whole muscle products will be badly decreased. The phenomenon is especially liable to occur in meat with lower pH (carbonic acid gas is generated more when pH is low) or in the case where bubbles are difficult to get out of a lump of meat, even more difficult within a casing.

The citrates of sodium and potassium are rather often used in meat products to enhance water retention or bindability, but their effectiveness is limited by their own small power to increase the pH. Therefore, their effectiveness is small for their amount of addition. Further, since reasonable effect cannot be expected even by a large amount of single addition of them, the objects for which citrates are to be used should be limited.

Although trisodium phosphate and tripotassium phosphate have comparatively large effect on increasing the pH, as large as those of sodium carbonate, etc., phosphates are against the demand of consumers that they want to decrease intake of phosphates.

In a certain district, they have started using glycinates of sodium and potassium for meat products. However, there are many cases where glycinates cannot be used for the meat products, because the use of glycinates is now permitted still in a few countries and only a few consumers have recognized the use of them.

Calcium hydroxide, calcium oxide and a calcined calcium comprising the former two as the main ingredient have a strong power to increase the pH as alkaline food additives and have long since been used for some foods. They are used particularly for meat products such as sausage or hamburger in which lumps of meat are minced for the purpose of improving bindability and taste. Nevertheless, they are rarely used for whole muscle products such as hams, bacons, or roast pork in which lumps of meat are used as the raw material without mincing the lumps of meat. The reason therefor is that the so-called softening phenomenon, or soft finishing, occurs if they are added to whole muscle products, though the bindability is improved and other properties come up a little with a product for which a phosphate has been used. The product for which they are used gets thereby fragile, and the product can be only slightly improved in yields when sliced (slicing yield) . Also, when tearing off the stacked sliced ham one slice by another, each slice is liable to be broken, providing a product difficult to handle for customers.

As a method for improving a feeling in the mouth by soaking a lump of meat in an aqueous solution of calcined calcium may be first mentioned that of JP-A-7-322853. Therein disclosed is a method where fish, shellfish or meat is processed with an aqueous solution of calcined calcium to improve the yield of products and a feeling in the mouth without impairing the taste. Although the method is indeed excellent, it is considered that the single use of calcined calcium cannot solve the issue to be solved by the present invention as claimed in the present application, for the purpose of finishing whole muscle products "hard".

Sodium hydroxide and potassium hydroxide have the power to increase the pH, superior to other food additives, and are frequently used to adjust the pH. However, they locally increase the pH too high and make meat excessively changed in its properties owing to their high solubility and strong alkalinity. Thereby, the feeling in the mouth is partially degraded, and the taste is also impaired. Further, it is difficult to handle them due to their high deliquescent characteristic and also extremely difficult to manufacture powdery preparations.

Next, in JP-A-2001-29006 is disclosed a method for preventing the fading of meat due to illumination by increasing the pH of meat through addition of an alkali. The subject of the invention are products such as roast beef, minced meat and the like, which are deep in color and liable to fade, and which belong to a group of products quite different from ham, bacon and roast pork which are the subject of the present invention and for which hardness is required. Further, there is no description about the change in hardness, and also no description suggesting a significant increase in hardness by means of combining some particular alkalis among the exemplified alkalis.

There has long since been a method where alkali materials except phosphates are used for enhancing the bindability of whole muscle products without using phosphates. Nevertheless, as has been described above, there have not been any industrially satisfactory methods without such problems as difficulty in handling, insufficient effectiveness, softening, occurrence of troubles in appearance, and the like.

### SUMMARY OF THE INVENTION

### [Problems to be Solved by the Invention]

The object of the present invention is to provide (a) a preparation aiming to enhance the bindability and hardness of a whole muscle product while producing the product without the addition of, or with the reduced addition of, a phosphate, (b) a pickle containing such preparation, (c) a whole muscle product obtained using such pickle, and (d) a method for producing such whole muscle product.

### [Means for Solving the Problems]

The present inventors have found through their earnest investigation that the use for a whole muscle product of a preparation containing calcium hydroxide and/or calcium oxide, and trisodium citrate and/or tripotassium citrate in a specific ratio improves the hardness significantly, as well as the water retention and the bindability, providing no troubles in appearance, even without or with a reduced amount of the addition of a phosphate, and that the properties thereof are close to those obtained by using a phosphate.

Also, it has been found that the properties closer to those obtained by using a phosphate are demonstrated by means of using a transglutaminase together with the preparation, resulting from the synergistic increase in hardness of the whole muscle product with an extremely small amount of the addition of a transglutaminase. Further, it has also been found that the increase, with time, in the viscosity of a pickle due to the transglutaminase is significantly prevented by controlling the pH of the pickle within a specific range. The present inventors have accomplished the present invention through utilizing these findings.

Accordingly, the present invention comprises the subject matter as defined in the claims.

### DETAILED DESCRIPTION OF THE INVENTION

The present invention will be described in details in the following.

A whole muscle product aimed at according to the present invention includes all products to be made by using, as a raw material, a lump of meat without mincing the same, not only ham, bacon and roast pork using pork as a raw material but also roast beef and the like. It refers to meat products obtained by processing and cooking lumps of meat. Pressed ham made by collecting some pieces of meat and packing them in a mold for shaping is also included in the whole muscle product of the present invention. With respect to meat as a raw material, any meat can be used regardless of the animal types, for example, beef, pork, poultry, ram, horsemeat, and the like.

Moreover, the present invention is specifically useful to ham and bacon among whole muscle products which require a hard and strong feeling in the mouth when sliced as well as high bindability.

Calcium oxide and/or calcium hydroxide which can be used according to the present invention includes chemical synthetic calcium, calcined rocks, lime (quicklime and slaked lime), and the so-called calcined calcium of life origin such as calcined eggshells, seashells or corals, and any of them is available to the present invention. However, in view of the customers' inclination for natural products, it is preferable to use calcined calcium produced using calcium of life origin as the raw material. Incidentally, the main component of calcined calcium originated from eggshells, seashells or corals is calcium oxide with a small amount of unessential calcium hydroxide.

Calcium oxide and calcium hydroxide may be used separately or together in combination. When they are used in combination, it is preferable that the sum of the calcium hydroxide and the calcium oxide is contained at a molar ratio of 1 : 1.5 - 1 : 10 to the trisodium citrate and/or tripotassium citrate. As far as this requirement is satisfied, the effectiveness is never changed in spite of changing the ratio of calcium oxide to calcium hydroxide, and therefore, the composition can be freely determined without any limitations. Generally speaking, calcium hydroxide rather than calcium oxide, or slaked calcined calcium in the form of the hydroxide rather than as-calcined calcium is easy to be handled.

Further, as has been described above, calcined calcium the main component of which is calcium oxide and is originated from eggshells, seashells or corals can be used according to the present invention. Incidentally, products obtained by calcining bones of fishes or animals are also classified as calcined calcium. However, since the main component thereof is calcium phosphate, they are not suitable for the purpose of the present invention.

With regard to citrates, there is no difference in effectiveness between the salt hydrates and the anhydrous salt thereof. Trisodium citrate and/or tripotassium citrate may be used separately or together in combination. When they are used in combination, it is preferable that the sum of the trisodium citrate and the tripotassium citrate is mixed with the calcium hydroxide and/or the calcium oxide in a predetermined ratio described above. As long as this requirement is satisfied, the ratio of both the citrates can basically be determined freely.

Moreover, an excipient such as dextrin, lactose, starch or the like may be mixed as required, and a seasoning generally used can also be added.

Besides, when caking is liable to occur owing to the properties of subsidiary component (s), it is preferable to use an anhydrous citrate, which is relatively difficult to agglomerate. And, when cost is desired to be reduced, an inexpensive crystalline salt may preferably be used.

Transglutaminase is added to a preparation according to the present invention. The "unit" which is an activity unit of a transglutaminase referred to in the present specification is measured and defined by the hydroxamate method described below. That is, a transglutaminase is reacted with a reaction system including benzyloxycarbonyl-L-glutamyl glycine and hydroxylamine as substrates in a 0.2M Tris buffer solution of pH 6.0 at a temperature of 37 °C, and the resulting hydroxamic acid is formed into an iron complex in the presence of trichloroacetic acid. Subsequently, an absorbance at 525 nm of the reaction system is measured, and the amount of the resulting hydroxamic acid is determined with a calibration curve. The amount of an enzyme, which is necessary to generate 1 µmol of hydroxamic acid in 1 minute, is defined as an activity unit, namely 1 unit (1U) of TGase (Refer to JA-A-64-27471 and U.S. Patent No. 5,156,956).

Among transglutaminases, there are a alcium-independent transglutaminase and a calcium-dependent transglutaminase, and both of them can be used according to the present invention. As examples of the former, there may be mentioned those derived from microorganisms such as actinomicetes, Bacillus subtilis, and the like (Refer to, for example, JP-A-64-27471). As examples of the latter, there may be mentioned those derived from the guinea pig liver (Refer to JP-B-1-50382), those derived from microorganisms such as oomycetes, those derived from bovine blood, swine blood and the like, those derived from fishes such as salmon and red sea bream (Refer to, for example, SEKI Nobuo et al., "Nihon Suisan Gakkaishi, vol. 56, 125-132 (1990)" and "Nihon Suisan Gakkai Spring Meeting Lecture Abstracts for the year of 1990, p.219"), those referred to as factor XIII (the 13rd factor) (WO 93/15234) present in blood and the like, and those derived from an oyster or the like.

Further, there may be mentioned those produced by gene recombination (JP-A-1-300889, JP-A-6-225775, JP-A-7-23737 and European Patent Laid-Open EP-0693556A). Any of these transglutaminases can be used, and the origin and production process thereof may not particularly limit the availability of them.

Especially, calcium-independent transglutaminases are preferable in view of functionality and economics for use in foods. For example, the foregoing transglutaminases (JP-A-64-27471) derived from microorganism can satisfy all requirements and are now considered to be most suitable ones.

In the case where these components are beforehand mixed to form preparations, repeatedly speaking, they are prepared through mixing calcium oxide and/or calcium hydroxide with citrate(s) in an amount of 1.5 - 10 moles, preferably of 2 - 4 moles per 1 mole of the calcium oxide and/or calcium hydroxide. Further, when a transglutaminase is used in combination, it is recommended that the transglutaminase is mixed in an amount of 250 - 70,000 units, preferably 1,500 - 30,000 units per 1 mole of the calcium oxide and/or calcium hydroxide to prepare the preparations.

Calcium oxide and/or calcium hydroxide whose quantity to be used is determined as above and transglutaminase as needed are dissolved into water with other subsidiary raw materials to prepare a pickle. Whichever process can be chosen out of such ones, where each raw material has been beforehand mixed to form a preparation and then dissolve them into water, where each raw material is prepared individually and dissolved separately, and further where each raw material is first mixed with subsidiary raw materials such as salt, seasoning, hetero-protein (casein, soybean protein, gelatin, etc.) and the like, and then dissolved into water.

There is a remarkable point when using a transglutaminase in combination. First, it is preferable that the transglutaminase in a pickle must be prevented from exposure to the circumstance with a pH beyond 13 during preparation of the pickle in order to avoid deactivation of the enzyme due to a high pH. When dissolving each raw material separately into a pickle, it is also preferable to make the pH lower than or equal to 13 just before dissolving the transglutaminase and to keep the pH lower than or equal to 13. Further, when each raw material has been beforehand mixed, a recipe is preferably adjusted beforehand to make the pH lower than or equal to 13 after dissolution.

Further, in the case where a transglutaminase is used in combination, when an aqueous solution containing a hetero-protein, especially such as soybean protein, caseins (milk protein consisting mainly of casein), or gelatin, is used as a pickle, increase in viscosity of the pickle can be inhibited and quality can be stabilized by designing the recipe so as to make the pH of the resulting pickle higher than or equal to 9.5, preferably higher than or equal to 10.

When a transglutaminase is added to such pickle containing these hetero-proteins, the pickle gets higher in viscosity. Nevertheless, the activity of a transglutaminase can be decreased reversibly by maintaining the pH of the pickle higher than or equal to 9.5, and thereby increase in viscosity of the pickle owing to crosslinking polymerization between proteins can be inhibited and the viscosity can be maintained at a stable state. Further, when a pickle containing a transglutaminase with a pH of higher than or equal to 9.5 is impregnated into meat, it is neutralized by the acid in the meat and the pH of the salted meat becomes less than or equal to 9.5. Consequently, the activity of the transglutaminase is recovered and the transglutaminase turns effective.

Besides, although there are some hetero-proteins showing increase in initial viscosity as the pH increases, change in viscosity during preservation is negligibly small enough to yield no troubles in production as far as the pH is between 9.5 and 13.

Controlling the pH of a pickle can be performed by adjusting the amount of calcium oxide and/or calcium hydroxide to be added or also by adjusting the composition of other raw materials to be used in the pickle.

As hetero-proteins, those which are commonly used in meat products, namely, soybean protein, caseins, egg white, whey protein, gelatin, collagen, plasma protein and the like, can be used in a usual manner. Of course, they can be used singly or in combination with other.

An appropriate amount of table salt, a nitrite, sodium ascorbate, sugars, gums and seasonings, which are commonly used in whole muscle products, can be added in a usual manner. Besides, since citrates themselves have a salty taste, it is necessary to consider avoiding too a salty taste through determination of an amount of salt allowing for the addition of citrates.

The thus-prepared pickle is impregnated into raw meat. The impregnation method includes a method in which raw meat is soaked in the pickle, a surface-spraying method, a coating method and a method of injection with a syringe, and any of these methods can be used. Also, a plurality of these methods may be used in combination.

The processed meat into which the pickle is impregnated is subjected to rubbing, tumbling, massaging or the like to uniformly disperse the components of the pickle in the raw meat. Thereby, salting time is shortened, and at the same time, the bindability is enhanced. As will be described below, it is preferable that the pH of salted meat is made to be in the range of 6.2 - 7.0.

The ratio in weight or the weight ratio of raw meat after impregnated with a pickle to the weight of initial raw meat is generally designated as pickle injection ratio, and that of ham produced industrially is usually about 110 - 220%. The present invention is available for ham with any pickle injection ratio.

In the following, a method of the present invention for producing whole muscle products will be described. First, an amount to be used of each raw material is determined as follows.

With regard to the amount of calcium oxide and/or calcium hydroxide to be used, it is preferable that these substances are added so as to make the pH of the meat, which has been impregnated with them via a pickle and then heated, namely the pH of the products (the whole muscle products), lie in the range of 6.2 - 7.0, preferably 6.4 - 6.7.

The reason therefor is because sufficient hardness cannot be obtained with the pH of products being less than 6.2, and not only the taste but also preservability of the products becomes worse with the pH beyond 7.0. Although the amount of calcium oxide and/or calcium hydroxide which will make the pH of the products lie in the range of 6.2 - 7.0 is dependent upon the recipe of a pickle, the weight of meat which has been impregnated with the pickle to that of the raw meat (pickle injection ratio), especially the pH of the raw meat (The pH varying in each lump of raw meat), and so forth, that of calcium oxide and/or calcium hydroxide per 1kg of the products is usually in the range of 0.007 - 0.040 moles, preferably 0.012 - 0.030 moles.

Incidentally, the pH of the products is preferably measured by a pH electrode or the like with the use of a solution which has been made by adding about 5 times as much water as a piece of the products thereto and homogenized by a homogenizer or the like.

With regard to the amount of citrate (s) to be added, the citrate(s) (trisodium citrate and/or tripotassium citrate) is or are added in an amount of 1.5 or more and 10 or less, preferably 2 or more and 9 or less molar ratio based on the calcium oxide and/or calcium hydroxide to be added.

That is to say, the calcium oxide and/or calcium hydroxide and the trisodium citrate and/or tripotassium citrate are preferably comprised at a molar ratio of 1 : 1.5 to 1 : 10, more preferably 1 : 2 to 1 : 9.

Citrate (s) is or are to be used in a amount of less than or equal to 0.1 mole, preferably less than or equal to 0.06 moles per 1 kg of the end product. When a molar ratio of the citrate (s) to the calcium oxide and/or calcium hydroxide is 1.5 or less, the products are softened undesirably. On the other hand, when citrate (s) is or are used in an amount of higher than 0.1 mole per 1kg of the end product, the balance of the taste in the product is lost to decrease the commercial value of the product.

When a transglutaminase is used in combination, it is added so as to be 10 - 500 units, preferably 50 - 300 units per 1 kg of the product. If a transglutaminase is used in an amount of less than 10 units per 1 kg of the product, it is of no effectiveness, while if it is used in an amount of beyond 500 units per 1 kg of the product, it makes the product too hard, resulting in low commercial value.

Now, the thus-treated salted meat is heated either directly or after shaped or sealed by being charged in a casing, packed in a frame, tied with a string or packed in vacuum. The meat may be coated with a batter coating according to the product form. With respect to the heating method, all heating processes used in foods, such as frying in oil, stewing, boiling, steaming, baking, oven cooking and electronic oven cooking, can be used. Ham or bacon, for example, is generally processed using drying, smoking if necessary, boiling or steaming. Ham or bacon is heated until the core temperature reaches finally 60°C - 85°C, preferably 70°C - 75°C. The cooked products are commercialized either as cooked or by being sliced or packed. Also, the processed meat before heating may be frozen or refrigerated, then distributed and heated just before being eaten.

The thus-produced whole muscle products have a pH of 6.2 or more and 7.0 or less, and contain the calcium in an amount of 0.01 mole or more and 0.04 moles or less per 1 kg of the product, and the citrates in an amount of 1.5 or more molar times of that of the calcium and in an amount of 0.1 mole or less per 1 kg of the product.

Incidentally, the present inventors presume the functional mechanism involved in the present invention to be as follows. Calcium ions impregnated into raw meat reach myofibrils in a muscle cell, and induce therein fragmentation of the myofibrils due to solubilization of the phospholipid in the myofibrils and also induce decomposition of myofibril proteins directly or via calcium-dependent proteases to destroy the structure of the myofibrils. In minced meat products such as sausage, hamburger, and the like, majority of the structures of the myofibrils is physically destroyed through mincing process such as grinding, cutting, or the like. Accordingly, the hardness of an end product is influenced very little by the destruction induced by the calcium, of the structures. However, in processing whole muscle products such as ham, bacon, roast pork, and the like where meat is handled in the form of a lump, such physical treatment is never performed that the myofibrils are thoroughly destroyed. Therefore, the contribution of myofibril structure to the hardness of the products is large and the hardness is greatly affected by the calcium. The fundamental mechanism involved in the present invention is that the effect of the calcium is inhibited and only the function of the alkali is brought out to enhance the hardness of whole muscle products, by blocking the calcium ions resulting from the calcium oxide and/or calcium hydroxide with the citrates.

The mechanism of preventing the viscosity of a pickle in combination with a transglutaminase according to the present invention is as follows. It is known that a transglutaminase suddenly loses its activity at a pH of more than or equal to 9.5. Nevertheless, the present inventors have found that the deactivation of a transglutaminase is reversible at a pH of more than or equal to pH 9.5 and less than or equal to 13, and that the activity can be recovered by neutralizing afterward the circumstances below pH 9.5. The present invention utilizes this characteristic, and on one hand, crosslinking polymerization of hetero-proteins in a pickle due to a transglutaminase is inhibited by maintaining the pH of the pickle at more than or equal to 9.5 and less than or equal to 13, and on the other hand, the activity of the transglutaminase is recovered to display its function for meat by utilizing the fact that the pH is decreased to less than or equal to 7 by the buffer action of the meat after the pickle is impregnated into the meat.

### EXAMPLES

In the following, the present invention will be described with reference to the examples.

### [Example 1]

According to Table 1 (a compositional table), subsidiary raw materials and water were weighed and mixed in a mixer, whereby a fundamental pickle was prepared.

**Table 1:**

| Composition of Fundamental Pickle | |
|---|---|
| | Composition (weight part) |
| Egg white powder | 89.1 |
| Sodium caseinate | 35.7 |
| Dextrin | 80.2 |
| Sugar | 24.9 |
| Sodium glutamate | 5.3 |
| Water | 732.7 |
| Sum total | 1000.0 |

Next, according to Table 2 (another compositional table wherein the amounts of the materials concerned are expressed in terms of weight parts per 246 weight parts of the fundamental pickle), seashell-calcined calcium (product of N.C. Corporation, calcium oxide content: 97%), trisodium citrate dihydrate (crystal), Activa TG (a preparation of a transglutaminase, specific activity: 1,000 units/g), polyphosphate (a mixture of tetrasodium pyrophosphate and sodium tripolyphosphate at a weight ratio of 1 : 1), and table salt were each weighed. After preparing preparations by powder-powder mixing, each preparation was added to 246 weight parts of the fundamental pickle, followed by adding water in order to make the total weight 286 weight parts, then mixing the resulting mixture sufficiently with a propeller mixer, passing the mixture through a colloid mill, and leaving the thus-treated mixture to stand in a refrigerated state for 12 hours, whereby disappearance of the bubbles was waited for. The prepared pickle was injected homogeneously into 100 weight parts of pork loin (800 - 1,000 g) with a pickle injector so as to make the total weight 140 weight parts. After injecting the pickle, tumbling was performed at a temperature of 5 °C (in a tumbler with 60 cm diameter, for 12 hours, alternating a 15 minutes rotation at 40 rpm and a 15 minutes stop). Then the meat was packed in a cellulose casing (the diameter being, when packed, 10.5 cm), tied, and then heated. The heating conditions were composed of drying at 60 °C for 2 hours, smoking at 60 °C for 1 hour, and boiling at 75 °C until the core temperature of the product reached 72 °C (about 2.5 hours). The heated pork loin ham was quenched by pouring water thereon, left standing at 5 °C overnight, weighed, sliced to a thickness of 1.5 mm, and organoleptically evaluated.

Besides, the ratio of the weight after heating to that before heating (yields in heating process) was between 88 - 90%. Additionally, considering variations in quality between the lumps of meat, 5 pork loin hams for each preparation recipe were prepared.

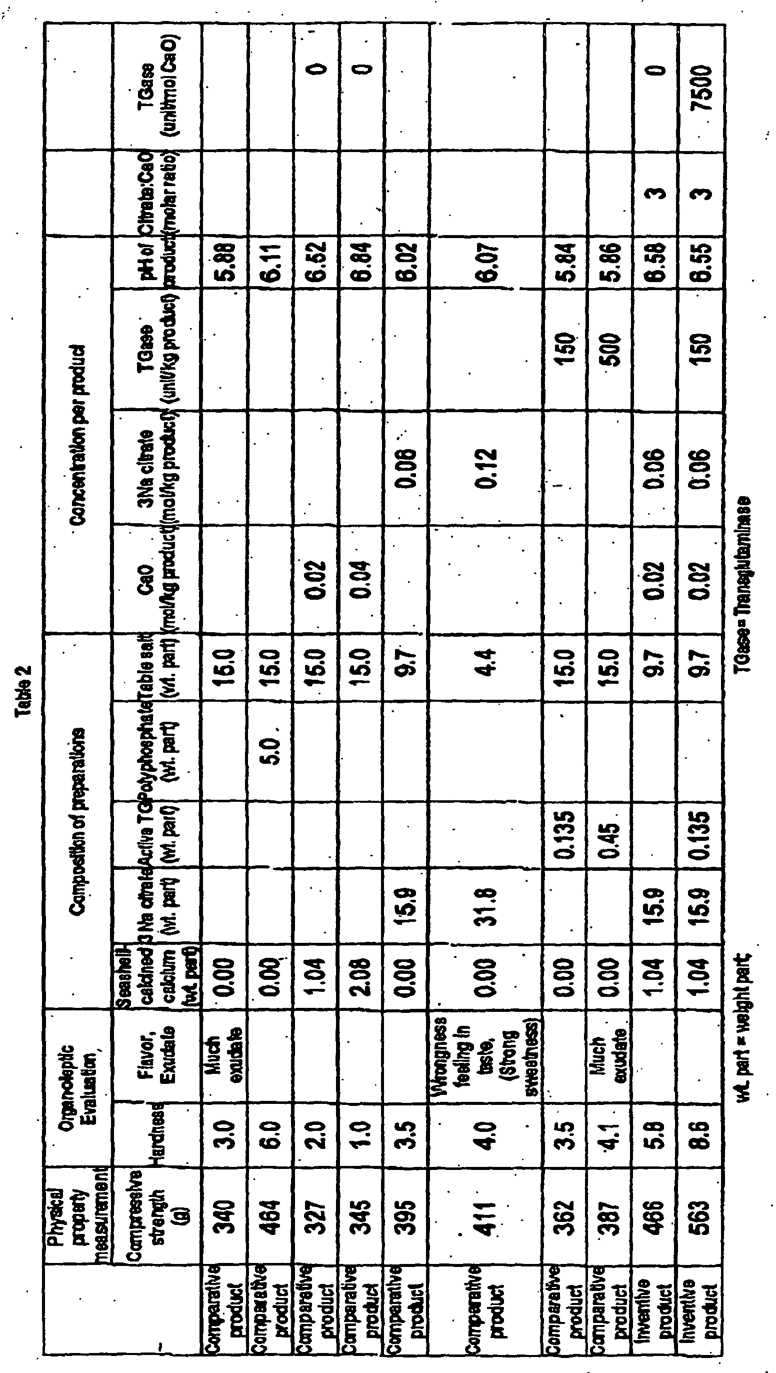

The organoleptic evaluation was performed by 7 well-trained panelists. Hardness was relatively ranked in the range of 10 grades on condition that the hardness of the group in which the preparation had consisted only of table salt was Score 1 and that of the group in which the preparation had consisted only of polyphosphate was Score 6. 5 pork loin hams for each recipe were evaluated, and the score for each recipe was determined to be the average of the total scores by all the panelists on condition that the highest and lowest scores out of the scores for 5 hams were removed, letting the average of 3 hams be the score by each panelist. Then, the scores by all the panelists were averaged, letting the average be the score for each recipe.

The pH of the hams was measured by the following method. 1 slice of ham was chosen as a sample from each of 5 hams of every recipe, and all of the 5 slices were minced, added with water in an amount of 5 times in terms of volume, homogenized, and left standing to measure the pH of the supernatant liquid at 20 °C using a pH electrode.

As shown in Table 2, the group which had been added with only calcined calcium became softer than the group which had not been added therewith, and the group which had been added with only trisodium citrate was improved a little in hardness. The group which had been added with only transglutaminase became slightly harder, but the exudation (of water) was noticeable among those with much addition thereof. The group which had been added with both calcined calcium and trisodium citrate in combination (Inventive product) became remarkably harder, and further, the group which had been added further with transglutaminase in combination (Inventive product) was outstandingly increased in hardness and provided with a greater increase in hardness with a smaller addition thereof than the group which had been added with only transglutaminase, in spite of the extremely small amount of (water) exudate.

### [Example 2]

In accordance with Table 3 (a compositional table), preparations and pickles were prepared, and then pork loin hams were prepared, followed by carrying out organoleptic evaluation and pH measurement in the same manner as in Example 1.

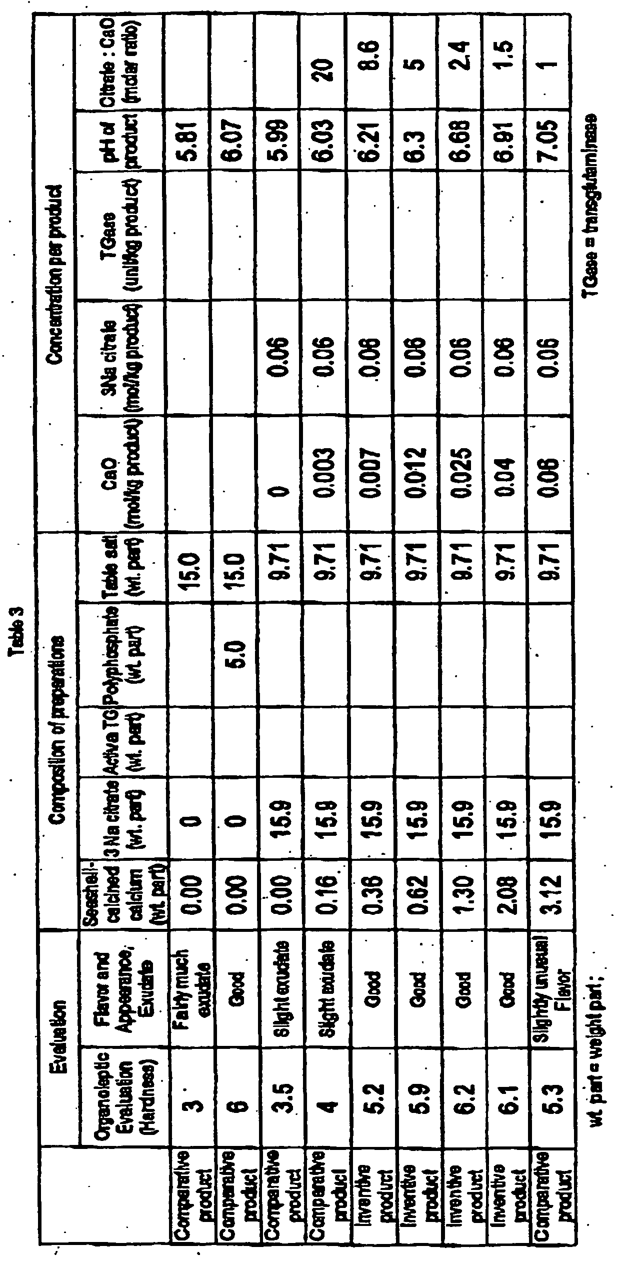

As shown in Table 3, when calcined calcium was added in an amount of more than 0.007 mole per 1 kg of a product, the pH of the product exceeded 6.2, whereby the hardness was significantly increased. The hardness increased with the increase of calcined calcium added. However, a slightly unusual flavor occurred approximately on condition that the addition of calcined calcium exceeded 0.040 mole per 1 kg of the product and that the pH of the product was larger than 7.0.

### [Example 3]

In accordance with Table 4 (a compositional table), preparations and pickles were prepared, and then pork loin hams were prepared, followed by carrying out organoleptic evaluation and pH measurement in the same manner as in Example 1.

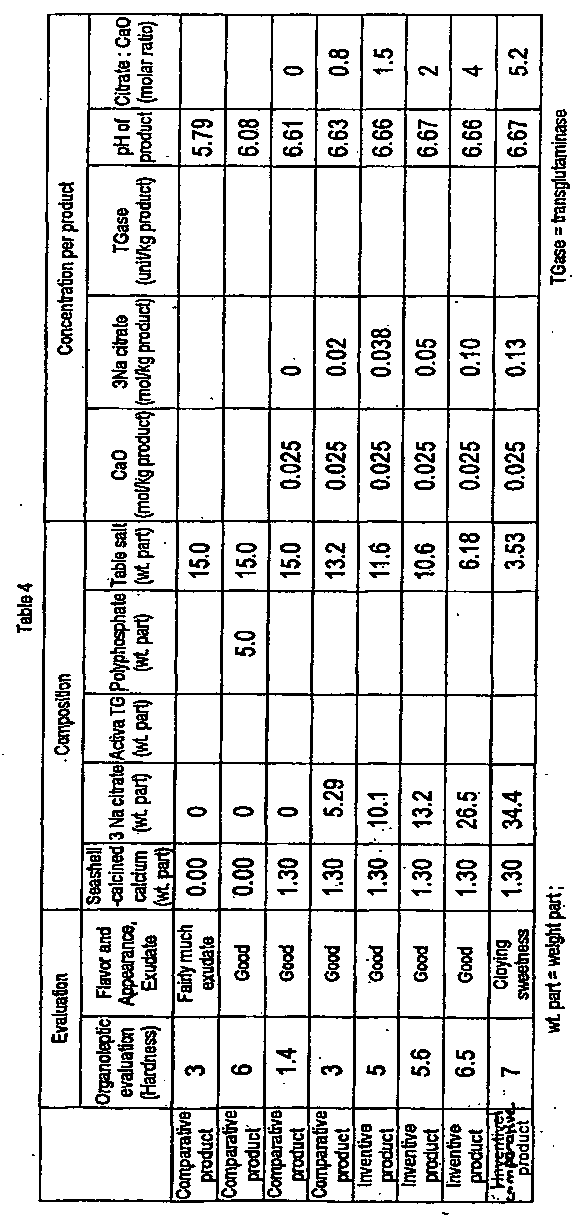

As shown in Table 4, when the trisodium citrate was added in an amount exceeding 1.5 at a molar ratio of the trisodium citrate to the calcium oxide derived from calcined calcium, the hardness increased remarkably. The hardness increased with the increase of the trisodium citrate added, but a cloying unpleasant sweet taste was shown and the balance of the taste was lost on condition that the trisodium citrate was added in an amount exceeding 0.1 mole per 1 kg of the product

### [Example 4]

In accordance with Table 5 (a compositional table), preparations and pickles were prepared, and pork loin hams were prepared, followed by carrying out organoleptic evaluation and pH measurement in the same manner as in Example 1.

As seen from Table 5, with respect of the group which had been added with transglutaminase in an amount of larger than 10 units per 1 kg of the product (Inventive product), the hardness increased definitely, but significant exudation (of water) was observed at 1,000 units.

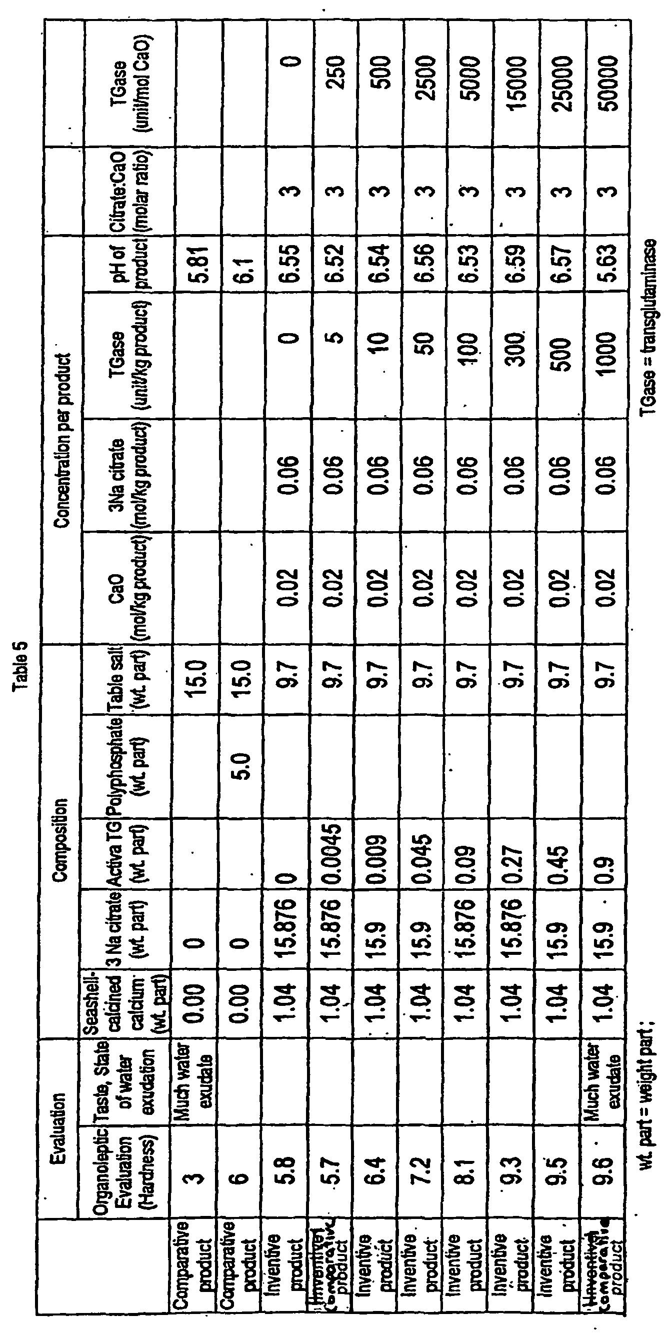

### [Example 5]

In accordance with Table 1 (a compositional table), subsidiary raw materials and water were weighed and mixed in a mixer, whereby a fundamental pickle was prepared. In accordance with Table 6 (a compositional table), seashell-calcined calcium (product of N.C. Corporation, calcium oxide content: 97%) and trisodium citrate dihydrate (crystal), and Activa TG (a preparation of a transglutaminase, specific activity: 1,000 units/g) were dissolved into the fundamental pickle, and mixed sufficiently in a propeller mixer, followed by passing the mixture through a colloid mill, leaving the thus-treated mixture to stand in a refrigerated state (5 °C) for 24 hours, whereby disappearance of the bubbles generated were waited for. Afterward, the viscosity of the pickle was measured from time to time. Again, hams were prepared in the same manner as in Example 1 using the pickle with a pH of higher than or equal to 9.5 to confirm the increase in hardness.

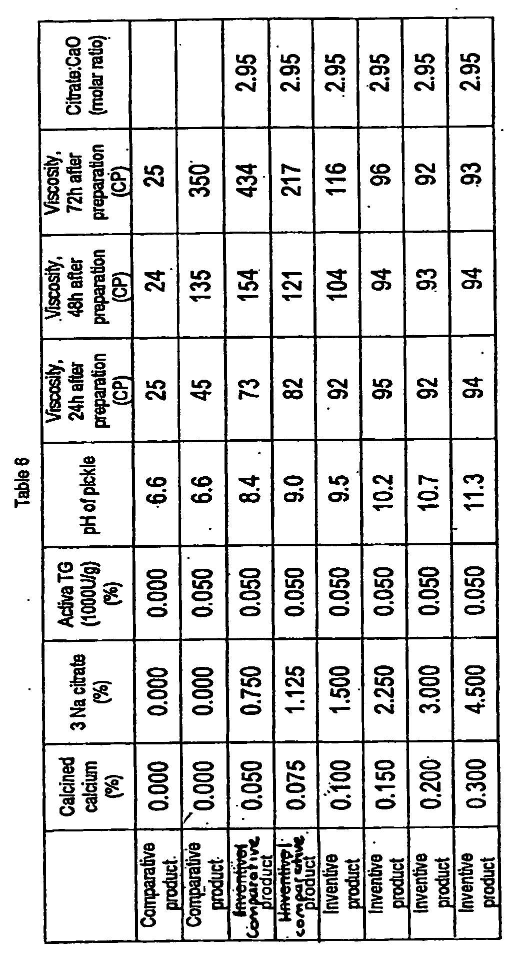

As shown in Table 6, although the initial viscosity increased for a pH of higher than or equal to 9.5, the subsequent change in the viscosity turned extremely small. Further, when hams were prepared using the pickle with a pH of higher or equal to 9.5, the hardness of the hams of the group which had been added with a transglutaminase (Inventive product) was definitely higher than that of the group which had not been added therewith. Thereby, it has been recognized that a transglutaminase is never deactivated at a pH beyond 9.5 and displays effects in hams.

### [Example 6]

In accordance with Table 7 (a compositional table), preparations and pickles were prepared in the same manner as in Example 1. Pork ham was cut into fist-sized pieces (about 100 g), followed by mixing well all the pieces of the cut ham, the pieces were divided into portions of about 1, 000 g. A pickle was injected homogeneously into 1,000 weight parts of the pork ham with a pickle injector so as to make the total weight 1, 400 weight parts. After injecting the pickle, tumbling was performed at a temperature of 5 °C (in a tumbler with 60 cm diameter, for 12 hours, alternating a 15 minutes rotation at 40 rpm, and a 15 minutes stop). Then the meat was packed in a cellulose casing (the diameter being, when packed, 10.5 cm), tied, and then heated. The heating conditions were composed of drying at 60 °c for 2 hours, smoking at 60 °C for 1 hour, and boiling at 75 °C until the core temperature of the product reached 72 °C (about 2.5 hours).

The heated hams were quenched by pouring cold water thereon, left standing at 5 °C overnight, weighed, and sliced to a thickness of 1.5 mm. The number of slices which had been broken at slicing process were counted and divided by the number of all the slices to obtain a yield (%) in slicing (slicing yield). The organoleptic evaluation and the pH measurement were performed in the same manner as in Example 1.

As shown in Table 7, the group with no addition was soft and all the slices therein were broken upon slicing. However, the hams of the present invention were hard and were never broken upon slicing.

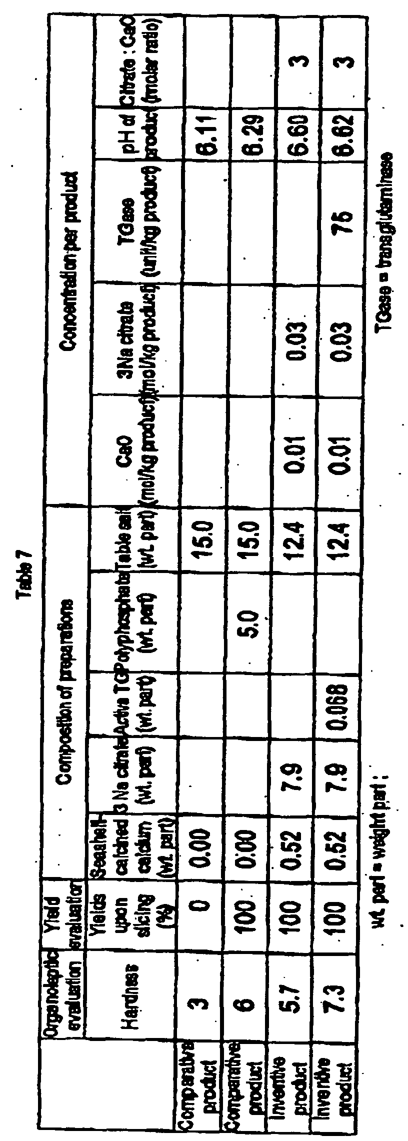

### [Effects of the Invention]

According to the present invention, physical properties of whole muscle products can be improved remarkably. Particularly, the present invention can impart bindability and hardness to whole muscle products while producing such products without the addition or with the reduced addition of a phosphate.

## Claims

1. A method for producing a whole muscle product by treating meat with a pickle, said meat being in the form of a meat lump without mincing the lump, wherein the pickle contains a preparation comprising (a) calcium hydroxide and/or calcium oxide and (b) trisodium citrate and/or tripotassium citrate at a molar ratio of 1 : 1.5 to 1 : 10.

2. The method according to claim 1, wherein the pickle further contains a transglutaminase.

3. The method according to claim 1 or 2, wherein said calcium oxide is calcined calcium.

4. The method according to any of the claims 1 to 3 wherein the pickle contains at least one protein selected from the group consisting of caseins, soybean protein and gelatin.

5. The method according to claim 2, wherein the pickle has a pH of from 9.5 to 13.

6. The method according to any of the claims 1 to 5, wherein the whole muscle product is ham, bacon or roast pork.

7. A preparation for a meat product for treating a lump of meat without mincing the lump, wherein the preparation comprises (a) calcium hydroxide and/or calcium oxide and (b) trisodium citrate and/or tripotassium citrate at a molar ratio of 1:1.5 to 1:10 and (c) a transglutaminase.

8. A pickle for meat product for treating a lump of meat without mincing the lump, wherein the pickle contains (a) calcium hydroxide and/or calcium oxide and (b) trisodium citrate and/or tripotassium citrate at a molar ratio of 1:1.5 to 1:10 and (c) a transglutaminase.

## Patentansprüche

1. Verfahren zur Herstellung eines Produkts aus ganzem Muskel durch Behandeln von Fleisch, das in der Form eines Fleischstücks ist und nicht gehackt ist, mit einer Lake, wobei die Lake eine Zusammensetzung enthält, die (a) Calciumhydroxid und/oder Calciumoxid und (b) Trinatriumcitrat und/oder Trikaliumcitrat in einem Molverhältnis von 1 : 1,5 bie 1 : 10 enthält.

2. Verfahren nach Anspruch 1, wobei die Lake außerdem eine Transglutaminase enthält.

3. Verfahren nach Anspruch 1 oder 2, wobei das Calciumoxid kalziniertes Calcium ist.

4. Verfahren nach einem der Ansprüche 1 bis 3, wobei die Lake mindestens ein Protein enthält, das aus der Gruppe ausgewählt ist, die aus Caseinen, Sojabohnenprotein und Gelatine besteht.

5. Verfahren nach Anspruch 2, wobei die Lake einen pH-Wert von 9,5 bis 13 hat.

6. Verfahren nach einem der Ansprüche 1 bis 5, wobei das Produkt aus ganzem Muskel Schinken, Schinkenspeck oder Schweinebraten ist.

7. Zusammensetzung für ein Fleischprodukt für die Behandlung eines Stückes Fleisch, ohne das Fleisch zu hacken, wobei die Zusammensetzung (a) Calciumhydroxid und/oder Calciumoxid und (b) Trinatriumcitrat und/oder Trikaliumcitrat in einem Molverhältnis von 1 : 1,5 bis 1 : 10 und (c) eine Transglutaminase enthält.

8. Lake für eine Fleischprodukt für die Behandlung eines Stückes Fleisch, ohne es zu hacken, wobei die Lake (a) Calciumhydroxid und/oder Calciumoxid und (b) Trinatriumcitrat und/oder Trikaliumcitrat in einem Molverhältnis von 1 : 1,5 bis 1 : 10 und (c) eine Transglutaminase enthält.

## Revendications

1. Méthode pour la production d'un produit à base de muscle entier par traitement d'une viande avec une saumure, ladite viande étant sous la forme d'un morceau de viande sans hachage du morceau, où la saumure contient une préparation comprenant (a) de l'hydroxyde de calcium et/ou de l'oxyde de calcium et (b) du citrate trisodique et/ou du citrate tripotassique à un rapport molaire de 1:1,5 à 1:10.

2. Méthode selon la revendication 1, dans laquelle la saumure contient en outre une transglutaminase.

3. Méthode selon la revendication 1 ou 2, dans laquelle ledit oxyde de calcium est du calcium calciné.

4. Méthode selon l'une quelconque des revendications 1 à 3, dans laquelle la saumure contient au moins une protéine choisie dans le groupe constitué par les caséines, la protéine du soja et la gélatine.

5. Méthode selon la revendication 2, dans laquelle la saumure a un pH de 9,5 à 13.

6. Méthode selon l'une quelconque des revendications 1 à 5, dans laquelle le produit à base de muscle entier est du jambon, du bacon ou du rôti de porc.

7. Préparation pour un produit à base de viande pour le traitement d'un morceau de viande sans hachage du morceau, cette préparation comprenant (a) de l'hydroxyde de calcium et/ou de l'oxyde de calcium et (b) du citrate trisodique et/ou du citrate tripotassique à un rapport molaire de 1:1,5 à 1:10 et (c) une transglutaminase.

8. Saumure pour un produit à base de viande pour le traitement d'un morceau de viande sans hachage du morceau, la saumure contenant (a) de l'hydroxyde de calcium et/ou de l'oxyde de calcium et (b) du citrate trisodique et/ou du citrate tripotassique à un rapport molaire de 1:1,5 à 1:10 et (c) une transglutaminase.
